# EUROPÄISCHE PATENTSCHRIFT

(11) **EP 2 088 357 B1**
(45) Veröffentlichungstag und Bekanntmachung des Hinweises auf die Patenterteilung: **21.03.2012**
(21) Anmeldenummer: 09150156.9
(22) Anmeldetag: 07.01.2009
(51) Int. Cl.: F16L 13/14, F16L 37/12, F16L 37/133, F16L 37/138

(54) **Unlösbare Verbindung aus einem Fitting, einer Hülse und einem Rohr sowie Fitting für Fluidleitungen und Hülse für Fluidleitungsrohre**
Permanent combination of a fitting, a sleeve and a pipe and fitting for fluid conduits and sleeve for fluid conduit pipe
Liaison indissoluble d'un raccord, d'une douille et d'un tuyau et raccord pour conduites de fluide et douille pour conduites de fluide

(30) Priorität: 01.02.2008 DE 102008007447
(43) Veröffentlichungstag der Anmeldung: 12.08.2009
(73) Patentinhaber: VIEGA GmbH & Co. KG, 57439 Attendorn (DE)
(72) Erfinder: Hofmann, Frank, 57439 Attendorn (DE)
(74) Vertreter: Cohausz & Florack

(56) Entgegenhaltungen:
- DE-A1- 4 010 130
- GB-A- 2 107 814
- US-A- 4 632 435

## Beschreibung

Die Erfindung betrifft eine unlösbare Verbindung mit einem Fitting für Fluidleitungen, einer Hülse für Fluidleitungsrohre und einem Rohr.

Aus dem Stand der Technik bekannte Fittings weisen Stützkörper auf, welche an ihrer Außenumfangsfläche eine umlaufende Nut aufweisen, in welcher ein Dichtelement, beispielsweise ein dichtender O-Ring, angeordnet werden kann. Um ein Rohr mit dem Fitting zu verbinden, wird ein Rohrende auf den Stützkörper gesteckt, so dass der Stützkörper in das Rohr eingreift. Der Außendurchmesser des Stützkörpers und der Innendurchmesser des Rohrs sind dabei vorzugsweise aneinander angepasst. Die Dichtheit der Verbindung wird durch das aus der Nut hervorragende, vorzugsweise elastische Dichtelement bewirkt, welches zwischen der Innenumfangsfläche des Rohrs und der Nut des Stützkörpers zusammengedrückt wird und somit dichtend an den beiden Flächen anliegt.

Allerdings wird der Strömungsquerschnitt des Rohrs an der Verbindungsstelle zwischen Rohr und Fitting durch den Eingriff des Stützkörpers in das Rohr verengt. Dies kann beispielsweise das Strömungsverhalten eines Fluids beeinträchtigen, indem an der Verbindungsstelle Turbulenzen und/oder ein Druckabfall des druckbeaufschlagten Fluids hervorgerufen werden. Darüber hinaus erhöht das Vorsehen eines Dichtelements als zusätzlichem, insbesondere beweglichem Element die Sorgfalt, welche ein Verwender zur Herstellung der unlösbaren Verbindung aufzubringen hat.

Um die zuvor genannten Nachteile zu vermeiden, könnte ein einen Außenkörper aufweisendes Fitting verwendet werden. Der Innendurchmesser des Außenkörpers und der Außendurchmesser des Rohrs sind in diesem Fall aneinander angepasst, so dass der Außenkörper des Fittings ein Rohrende umgreift. Die Abdichtung könnte bei einem solchen Fitting zwischen der Innenumfangsfläche des Außenkörpers und der Außenumfangsfläche des Rohrs vorgenommen werden, indem in einer an der Innenumfangsfläche des Außenkörpers angeordneten umlaufenden Nut ein O-Ring angeordnet wird. Auf diese Weise könnte eine Verengung des Strömungsquerschnitts des Rohrs durch Verkleinerung des Stützkörpers minimiert bzw. durch Weglassen des Stützkörpers sogar vollständig vermieden werden.

Allerdings ist diese Art der Abdichtung beispielsweise nicht für Verbundrohre geeignet, welche mehrere Schichten aus miteinander verbundenen, gegebenenfalls geklebten, unterschiedlichen Materialien aufweisen. Denn ein in dem Rohr bzw. Fitting geführtes Fluid kann mit der Stoßkante des Rohrendes, an welchem die Verbindungsstellen der Materialien des Verbundrohrs exponiert sind, in Kontakt kommen bzw. diese benetzen, so dass der Zusammenhalt der einzelnen Schichten des Verbundrohrs, beispielsweise durch Aufweichung, und damit auch die Dichtheit beeinträchtigt werden können.

Der Erfindung liegt somit das technische Problem zu Grunde, eine unlösbare Verbindung, welche eine zuverlässige Abdichtung, insbesondere gegenüber druckbeaufschlagten Fluiden gewährleistet und die zuvor genannten Nachteile vermeidet, anzugeben.

Das technische Problem wird gelöst durch eine unlösbare Verbindung mit einem Fitting für Fluidleitungen, welches einen Grundkörper, einen Außenkörper und einen Stützkörper aufweist, wobei der Außenkörper und der Stützkörper zwischen sich eine Nut ausbilden, wobei der Außenkörper an der Innenumfangsfläche mindestens eine Rastnut aufweist und wobei der Stützkörper an der Außenumfangsfläche eine gegen die Achse des Fittings geneigte Dichtfläche aufweist, mit einer Hülse für Fluidleitungsrohre, welche mindestens einen an der Außenumfangsfläche angeordneten Rastvorsprung und mindestens einen in axialer Richtung verlaufenden, offenen Schlitz aufweist, wobei im Bereich des Rastvorsprungs an der Innenumfangsfläche mindestens ein Fixiervorsprung angeordnet ist, und mit einem Rohr, wobei die Hülse ein Rohrende unter Vorspannung umgreift, wobei das Rohrende mit der Hülse unter Vorspannung in die Nut eingreift, wobei die Rastnut und der Rastvorsprung einen Kraftschluss bewirken, wobei der Stützkörper zumindest teilweise in die Innenumfangsfläche des Rohrs eingeformt ist und wobei die Fixiervorsprünge in die Außenumfangsfläche des Rohrs eingeformt sind.

Die Vorteile der erfindungsgemäßen unlösbaren Verbindung sowie des erfindungsgemäßen Fittings und der erfindungsgemäßen Hülse werden aus der folgenden Beschreibung der Herstellung der unlösbaren Verbindung deutlich.

Die Hülse wird mit dem geschlitzten Ende voran auf ein Rohrende geschoben. Der Außendurchmesser des Rohrs weist dabei bevorzugt ein leichtes Übermaß gegenüber dem Innendurchmesser der Hülse auf. Durch die offenen Schlitze kann die Hülse aufgeweitet werden, so dass sie das Rohrende umgreift. Auf Grund der durch den Aufweitungsvorgang bewirkten Vorspannung werden die an der Innenumfangsfläche angeordneten Fixiervorsprünge leicht gegen die Außenumfangsfläche des Rohrs gedrückt und reißen diese gegebenenfalls während des Aufschiebevorgangs leicht an. Die Vorspannung der Hülse auf dem Rohrende stabilisiert darüber hinaus die Position der Hülse an dem Rohrende, so dass ein unbeabsichtigtes Abrutschen der Hülse von dem Rohr vermieden wird.

Das von der Hülse umgriffene Rohrende wird nun unter Aufwendung von Druck in die zwischen dem Außenkörper und dem Stützkörper des Fittings gebildete Nut im Wesentlichen in axialer Richtung eingeführt. Die Dicke des aus der Hülse und dem Rohr gebildeten Verbundes weist dabei bevorzugt ein Übermaß gegenüber der Breite der Nut auf. Damit das von der Hülse umgriffene Rohrende in die Nut eingreifen kann, wird der Stützkörper zumindest teilweise in die Innenumfangsfläche des Rohrs eingeformt. Das Innere des Rohrendes wird dabei leicht aufgeweitet. Dadurch liegt die gegen die Achse des Fittings geneigte Dichtfläche eng an der aufgeweiteten Innenumfangsfläche des Rohrendes an und kann somit eine effektive Abdichtung des Inneren des Rohrs bzw. Fittings gegenüber der Umgebung gewährleisten.

Auf diese Weise lässt sich beispielsweise auch verhindern, dass ein in dem Rohr bzw. Fitting geführtes Fluid mit den Stoßkanten eines Verbundrohrs in Kontakt kommt. Daher sind das Fitting, die Hülse sowie die unlösbare Verbindung insbesondere für die Verwendung mit Verbundrohren geeignet. Ferner wird die von dem Stützkörper verursachte Verengung des Strömungsquerschnitts des Rohrs durch die zumindest teilweise Einformung des Stützkörpers in die Innenumfangsfläche des Rohrs zumindest reduziert. Die Wahrscheinlichkeit von Turbulenzen und/oder eines Druckabfalls an der Verbindungsstelle zwischen Rohr und Fitting wird dadurch wenigstens gemindert. Es ist natürlich auch möglich, den Stützkörper so weit in die Innenumfangsfläche des Rohrs einzuformen, dass keine Querschnittsverengung entsteht.

Die Dichtfläche kann als Fläche eines Kegelsegments ausgestaltet werden, wobei sich der Kegelradius vom distalen Ende in Richtung des proximalen Endes des Stützkörpers über einen bestimmten Abschnitt vergrößert. Die Radiusänderung kann auch über die gesamte axiale Erstreckung des Stützkörpers vorliegen. Auf diese Weise kann die Innenumfangsfläche des Rohrendes während des axialen Einführ- bzw. Aufweitungsvorgangs die Fläche des Kegelsegments hinaufgleiten. Vorteilhaft an der Fläche eines Kegelsegments ist die technisch vergleichsweise einfache Umsetzbarkeit. Es ist jedoch auch denkbar, die Dichtfläche gegen die Achse des Fittings gekrümmt oder gebogen auszugestalten. Dadurch können die während des Aufweitungsvorgangs an der Innenumfangsfläche des Rohrendes wirkenden Kräfte besser an die Materialien des Stützkörpers und des Rohrs angepasst werden.

Die durch die Umformung des Rohrinneren bewirkte Vorspannung des Rohrendes in der Nut wird durch den Eingriff des an der Außenumfangsfläche der Hülse angeordneten Rastvorsprungs in die an der Innenumfangsfläche des Außenkörpers angeordnete Rastnut aufrechterhalten. Während des axialen Einführvorgangs wird der Rastvorsprung gegen die Innenumfangsfläche des Außenkörpers gedrückt. Da der Fixiervorsprung an der Innenumfangsfläche der Hülse im Bereich des Rastvorsprungs angeordnet ist, wird der die Außenumfangsfläche des Rohrs zuvor lediglich leicht anreißende Fixiervorsprung durch den Druck auf den Rastvorsprung vorzugsweise vollständig in die Außenumfangsfläche des Rohrs getrieben und somit darin verankert. Auf diese Weise ist eine dauerhafte und stabile Verbindung zwischen der Hülse und dem Rohrende geschaffen.

Das unter Vorspannung in die Nut eingreifende, von der Hülse umgriffene Rohrende kann somit nicht aus der Nut herausgedrückt werden, denn die Hülse wird durch den Eingriff des Rastvorsprungs in die Rastnut gehalten, und das Rohr ist mit der Hülse über die Fixiervorsprünge dauerhaft verbunden, so dass eine unbeabsichtigte axiale Bewegung aus der zwischen dem Außenkörper und dem Stützkörper gebildeten Nut heraus vermieden wird.

In einer bevorzugten Ausgestaltung vergrößert sich die Dicke des Außenkörpers zwischen dessen distalem Ende und der Rastnut radial einwärts. Auf diese Weise wird der Einführvorgang des von der Hülse umgriffenen Rohrendes in das Fitting erleichtert. Denn das Rohrende wird durch diese Verengung des Querschnitts des Außenkörpers in Richtung der zwischen Außenkörper und Stützkörper gebildeten Nut geführt. Darüber hinaus kann der von dem Außenkörper auf den Rastvorsprung der Hülse ausgeübte Druck, welcher die Fixiervorsprünge der Hülse in die Außenumfangsfläche des Rohrs treibt und somit die dauerhafte Verbindung zwischen Rohr und Hülse bewirkt, stetig vergrößert werden, bis der Rastvorsprung in die Rastnut des Außenkörpers eingreift.

Vorzugsweise überragt der Außenkörper den Stützkörper in axialer Richtung. Auf diese Weise kann die Stabilität des Außenkörpers erhöht werden, was insbesondere die Funktion des Außenkörpers als Widerlager gegen den Rastvorsprung, welcher die Fixiervorsprünge in der Außenumfangsfläche des Rohrs verankert, fördert. Die axiale Abmessung des Außenkörpers ermöglicht es, weitere bauliche Ausgestaltungen an dem Fitting vorzunehmen. Es ist beispielsweise denkbar, den Außenkörper mit einem Langloch zu versehen. Das Langloch erstreckt sich vorzugsweise in axialer Richtung und ist bevorzugter Weise am proximalen Ende des Außenkörpers im Bereich des Grundkörpers angeordnet. Mit einem Blick durch das Langloch kann sich ein Verwender des Fittings vergewissern, ob das von der Hülse umgriffene Rohrende bis zur empfohlenen, gegebenenfalls vorgeschriebenen Position in die Nut eingeführt worden ist.

In einer weiteren vorteilhaften Ausgestaltung sind der Grundkörper und der Stützkörper zweiteilig ausgebildet. Auf diese Weise kann das Fitting insbesondere an Schichten aus verschiedenen Materialien aufweisende Verbundrohre angepasst werden. Besonders bevorzugt ist es, wenn das Material des Stützkörpers dem Material des Rohrs oder, im Fall eines Verbundrohrs, dem Material der inneren Schicht des Rohrs entspricht. Weist das Verbundrohr beispielsweise eine innere Schicht aus einem metallischen Werkstoff, beispielsweise Kupfer, Rotguss oder Edelstahl auf, kann der Stützkörper ebenfalls aus dem entsprechenden metallischen Werkstoff, beispielsweise Kupfer, Rotguss oder Edelstahl gefertigt sein, wohingegen der Grundkörper im Allgemeinen aus Kunststoff besteht. Auf diese Weise kann insbesondere die Verträglichkeit des Stützkörpers mit dem Material des Rohrs bzw. der inneren Schicht des Rohrs verbessert werden.

Das dem geschlitzten Ende abgewandte Ende der Hülse kann in einer weiteren vorteilhaften Ausgestaltung mindestens eine Öffnung aufweisen. Die Öffnung ermöglicht es einem Verwender, den empfohlenen, gegebenenfalls vorgeschriebenen Sitz der Hülse auf dem Rohrende zu kontrollieren. Es ist auch möglich, diese Kontrolle durchzuführen, wenn das von der Hülse umgriffene Rohrende in das Fitting eingeführt wurde, vorausgesetzt, dass die Öffnung an der Hülse und ein Langloch am Außenkörper des Fittings einander zumindest teilweise überdeckend ausgerichtet sind. Dadurch ist die Kontrolle auch an einer bereits hergestellten, unlösbaren Verbindung durchführbar.

Ferner weist vorzugsweise das geschlitzte Ende der Hülse an der Außenumfangsfläche einen flanschartigen Vorsprung auf. Auf diese Weise kann insbesondere die Einschiebeposition des von der Hülse umgriffenen Rohrendes in das Fitting in eine dem Einschiebevorgang des Rohrs gleichgerichtete axiale Richtung begrenzt werden. Dies ermöglicht einem Verwender beispielsweise, die korrekte Einschiebeposition durch die Anlage des flanschartigen Vorsprungs an der senkrecht zur Achse gerichteten Stoßfläche des Außenkörpers zu erkennen. Gegebenenfalls kann auch nur ein Kontakt zwischen Stoßfläche und flanschartigem Vorsprung ausreichend sein.

Weiterhin ist es möglich, das dem geschlitzten Ende abgewandte Ende der Hülse radial einwärts, insbesondere um einen Winkel von 90° abgewinkelt auszugestalten. Dadurch kann die Aufschiebeposition der Hülse auf das Rohrende axial in eine Richtung begrenzt werden. So ist auf diese Weise vermeidbar, dass die Hülse weiter als notwendig oder zweckmäßig auf das Rohr hinaufgeschoben wird.

Im Folgenden wird die Erfindung an Hand von in einer Zeichnung dargestellten Ausführungsbeispielen näher erläutert. In der Zeichnung zeigen:
- Fig. 1a-b: ein Ausführungsbeispiel eines Fittings gemäß der vorliegenden Erfindung in einer Querschnitts- und in einer isometrischen Ansicht,
- Fig. 2a-b: ein Ausführungsbeispiel einer Hülse gemäß der vorliegenden Erfindung in einer Querschnitts- und in einer isometrischen Ansicht,
- Fig. 3a-b: ein Ausführungsbeispiel eines Fittings, einer Hülse und eines Rohrs zur Herstellung einer unlösbaren Verbindung gemäß der vorliegenden Erfindung vor bzw. nach dem Verpressungsvorgang und
- Fig. 4: ein weiteres Ausführungsbeispiel eines Fittings und einer Hülse zur Herstellung einer unlösbaren Verbindung mit einem Rohr gemäß der vorliegenden Erfindung nach dem Verpressungsvorgang.

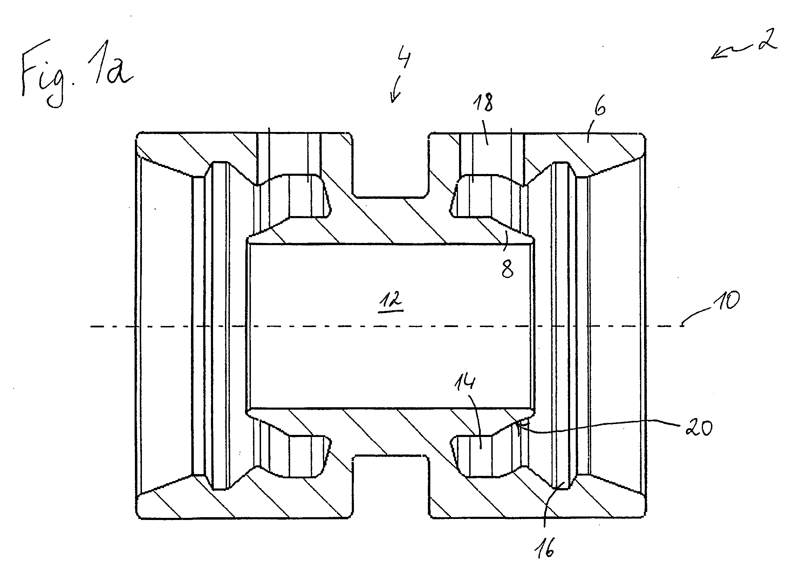

Fig. 1a zeigt in einem Ausführungsbeispiel ein Fitting 2 gemäß der vorliegenden Erfindung in einer Querschnittsansicht. Von einem Grundkörper 4 erstrecken sich in diesem Beispiel ein Außenkörper 6 und ein Stützkörper 8 in axialer Richtung 10. Die Innenumfangsfläche des Stützkörpers 8 begrenzt einen Durchflussbereich 12 des Fittings 2. Zwischen dem Außenkörper 6 und dem Stützkörper 8 ist eine Nut 14 zur Aufnahme eines Rohrendes (nicht dargestellt) ausgebildet. Das beispielhafte Fitting 2 aus Fig. 1a ist mit zwei Anschlussbereichen spiegelsymmetrisch ausgebildet. Auf diese Weise können zwei Rohre mit dem Fitting 2 an gegenüberliegenden Seiten unlösbar verbunden werden. Die Ausgestaltung ist aber nicht auf diese Form beschränkt. Es ist ebenso denkbar, lediglich einen Anschlussbereich an dem Fitting 2 vorzusehen, und die übrigen Teile des Fittings 2 so auszugestalten, dass sie für den Anschluss an Ventile, Hähne oder ähnliche Armaturen bzw. für eine integrale Ausbildung mit Ventilen, Hähnen oder ähnlichen Armaturen geeignet sind.

Der Außenkörper 6 überragt den Stützkörper 8 in diesem Beispiel in axialer Richtung 10. An der Innenumfangsfläche des Außenkörpers 6 ist eine umlaufende Rastnut 16 angeordnet. Der Außenkörper 6 weist ferner an seinem proximalen Ende ein Langloch 18 auf, durch welches die Nut 14 von außen einsehbar ist. Grundsätzlich können an dem Stützkörper 6 auch mehrere Langlöcher 18 vorgesehen sein. Die Dicke des Außenkörpers 6 vergrößert sich radial einwärts zwischen dessen distalem Ende und der Rastnut 16, so dass eine leichte Querschnittsverengung resultiert.

Der Stützkörper 8 weist an seiner Außenumfangsfläche eine Dichtfläche 20 auf, welche in diesem Beispiel um einen festen Winkel gegen die Achse 10 des Fittings 2 geneigt und als Fläche eines Kegelsegments ausgebildet ist. Es ist allerdings auch denkbar, die Dichtfläche 20 gebogen oder gekrümmt auszubilden, wenn dies für die später Verwendung des Fittings 2 als Teil einer unlösbaren Verbindung mit anderen Komponenten zweckdienlich ist.

Das in Fig. 1a abgebildete Ausführungsbeispiel des Fittings 2 ist einteilig ausgebildet und besteht vorzugsweise aus einem Kunststoff. Allerdings ist es auch möglich, andere Werkstoffe wie Kupfer, Rotguss oder Edelstahl zur Fertigung des Fittings 2 zu verwenden. Insbesondere ist es möglich, das Fitting 2 mehrteilig unter Verwendung verschiedener Materialien für die einzelnen Körper auszubilden.

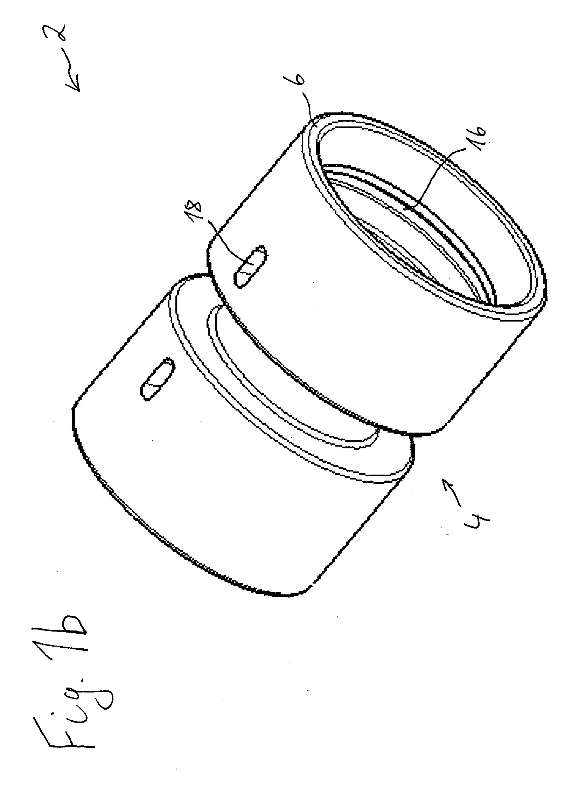

Fig. 1b zeigt eine zu der Darstellung in Fig. 1a korrespondierende isometrische Ansicht des Fittings 2.

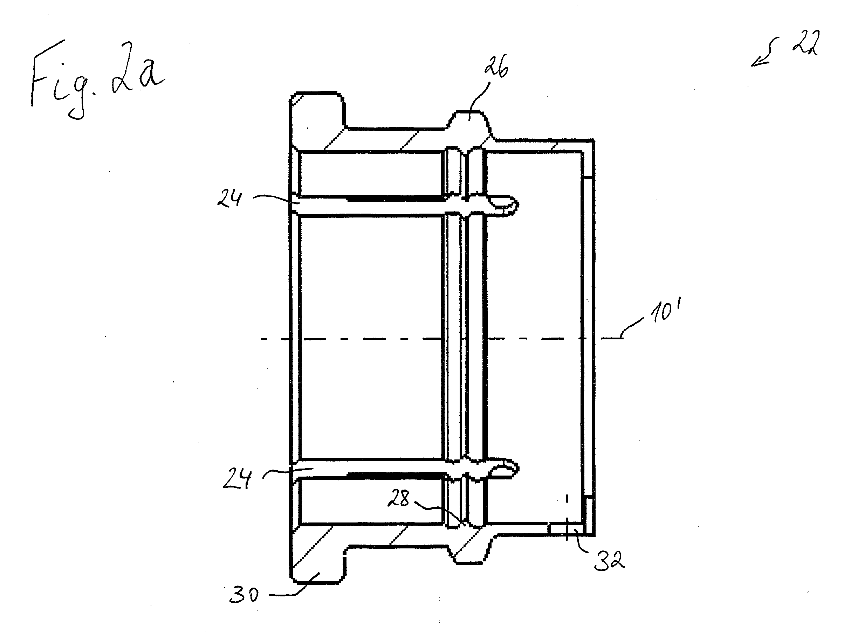

Fig. 2a zeigt in einem Ausführungsbeispiel eine Hülse 22 gemäß der vorliegenden Erfindung in einer Querschnittansicht. Die Hülse 22 ist im Wesentlichen ringförmig und weist vier in axialer Richtung 10' verlaufende, nach einer Seite offene Schlitze 24 auf. Die Schlitze 24 dienen dazu, den Innenquerschnitt der Hülse 22 an einer Seite aufweiten zu können. Auf diese Weise kann die Hülse 22 auf ein Rohr (nicht gezeigt) aufgesteckt werden, auch wenn der Außendurchmesser des Rohrs gegenüber dem Innendurchmesser der Hülse 22 ein leichtes Übermaß hat. Grundsätzlich ist die Anzahl der Schlitze 24 frei wählbar.

An der Außenumfangsfläche weist die Hülse 22 einen Rastvorsprung 26 auf, welcher zum Eingriff in die Rastnut 16 des zuvor beschriebenen Fittings 2 geeignet ist. Im Bereich des Rastvorsprungs 26 ist an der Innenumfangsfläche der Hülse 22 ein Fixiervorsprung 28 angeordnet, welcher in diesem Beispiel umlaufend ausgebildet ist. Grundsätzlich sind aber auch mehrere einzelne, voneinander getrennte Fixiervorsprünge 28 denkbar. Das geschlitzte Ende der Hülse 22 weist ferner an der Außenumfangsfläche einen flanschartigen Vorsprung 30 auf, durch welchen beispielsweise die Eingreif tiefe der Hülse 22 in ein Fitting 2 bestimmt werden kann. Darüber hinaus ist in diesem Beispiel das dem geschlitzten Ende abgewandte Ende der Hülse 22 radial einwärts um 90° abgewinkelt. Auf diese Weise werden Anlagepunkte bzw. eine Anlagefläche für ein Rohrende (nicht dargerstellt) geschaffen. An dem dem geschlitzten Ende abgewandten Ende der Hülse 22 ist eine Öffnung 32 angeordnet, welche einen Blick auf das Innere der Hülse 22 ermöglicht. Dies erweist sich als praktisch, wenn die Hülse 22 bereits auf ein Rohrende aufgesteckt ist. Es ist ferner denkbar, mehr als eine Öffnung 32 an der Hülse 22 vorzusehen.

Die Hülse 22 kann aus einem Kunststoff hergestellt werden. Allerdings ist auch die Verwendung anderer Materialien möglich.

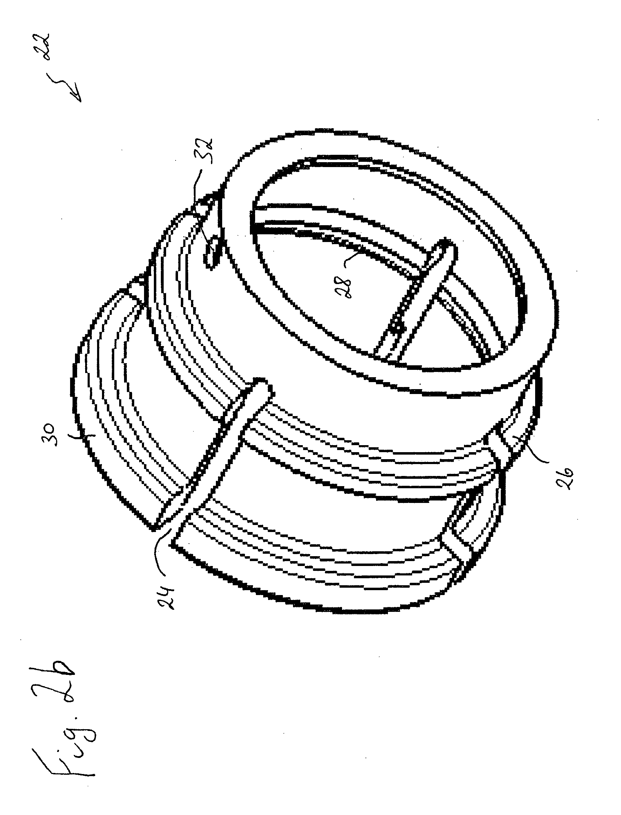

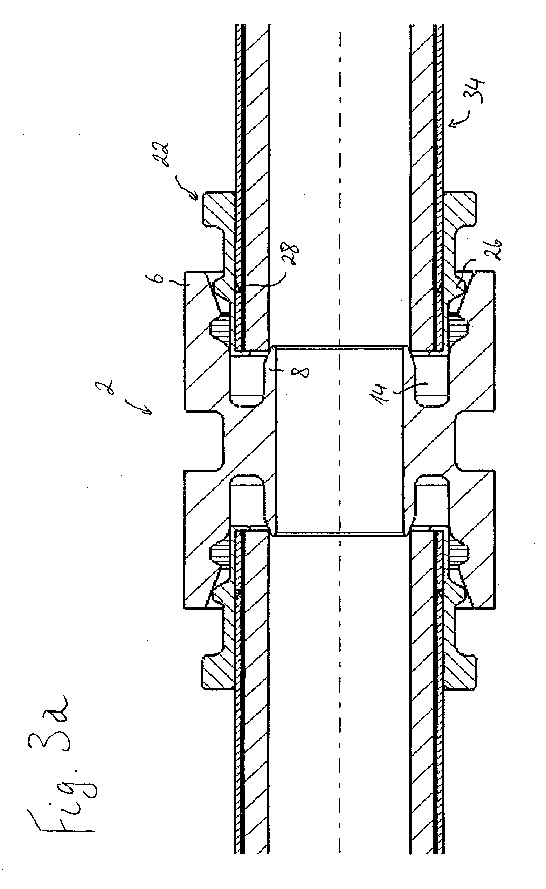

Fig. 2b zeigt eine zu der Darstellung in Fig. 2a korrespondierende isometrische Ansicht der Hülse 22. Fig. 3a zeigt in einem Ausführungsbeispiel ein Fitting 2 und eine Hülse 22 gemäß der vorliegenden Erfindung sowie ein Verbundrohr 34, bevor eine unlösbare Verbindung zwischen diesen drei Komponenten hergestellt ist. Das Verbundrohr 34 weist in diesem Beispiel drei Schichten auf.

Die Hülse 22 ist mit dem geschlitzten Ende voran auf das Ende des Rohrs 34 gesteckt. Die Hülse 22 wird dabei leicht aufgeweitet, so dass die dadurch erzeugte Vorspannung den an der Innenumfangsfläche der Hülse 22 angeordneten Fixiervorsprung 28 gegen die Außenumfangsfläche des Rohrs 34 drückt. Auf diese Weise kann eine stabile Position der Hülse 22 auf dem Rohrende gewährleistet werden. Die Gefahr eines unbeabsichtigten Abrutschens der Hülse 22 von dem Rohr 34 ist somit verringert.

Die Hülse 22 ist in diesem Beispiel so weit auf das Rohr 34 geschoben, bis ein äußerer Abschnitt der Stoßfläche des Rohrendes an dem abgewinkelten Ende der Hülse 22 anliegt. Auf diese Weise kann eine definierte Position von Hülse 22 und Rohr 34 zueinander sichergestellt werden.

Das von der Hülse 22 umgriffene Rohrende ist in Fig. 3a so weit in das Fitting 2 eingeführt, dass der äußere Bereich des Stützkörpers 6 mit der inneren Kante des Rohrs 34 sowie der Rastvorsprung 26 an der Außenumfangsfläche der Hülse 22 mit der geneigten Innenumfangsfläche des Außenkörpers 6 im Bereich dessen distalen Endes in Kontakt ist. Dies ist die Position der Komponenten zueinander, unmittelbar bevor das von der Hülse 22 umgriffene Rohrende unter Anwendung von Druck in die zwischen dem Außenkörper 6 und dem Stützkörper 8 gebildete Nut 14 eingeführt und damit die unlösbare Verbindung hergestellt wird.

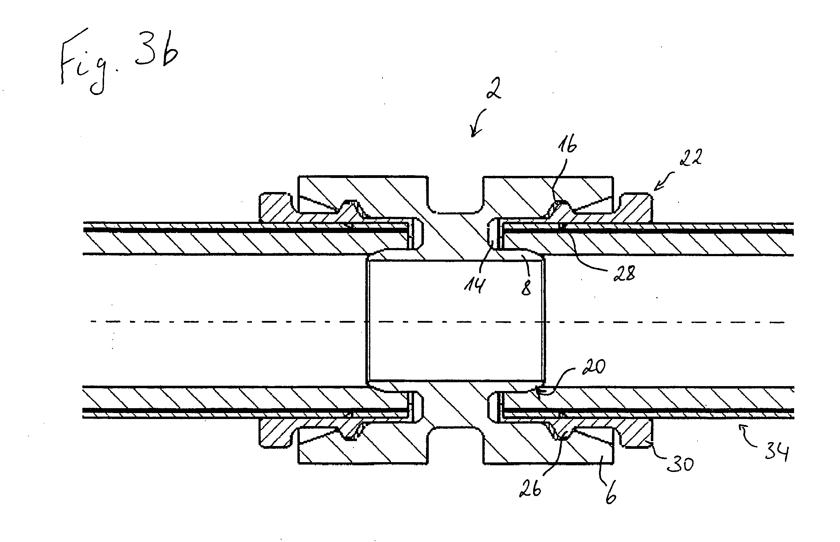

Fig. 3b zeigt nun in Fortführung des Beispiels aus Fig. 3a das Fitting 2, die Hülse 22 und das Verbundrohr 34 nach dem Verpressungsvorgang, also nach dem Herstellen der unlösbaren Verbindung.

Während des unter Anwendung von Druck weiteren Einführvorgangs des von der Hülse 22 umgriffenen Rohrendes in die Nut 14 wird der Stützkörper 8 zumindest teilweise in die Innenumfangsfläche des Verbundrohrs 34 eingeformt. Die Dichtfläche 20 liegt im Ergebnis eng an der umgeformten Innenumfangsfläche des Rohrs 34 an und dichtet die unlösbare Verbindung gegenüber in dem Rohr 34 bzw. dem Fitting 2 geführten Fluiden (nicht dargestellt) ab. Zusätzliche Dichtelemente wie O-Ringe sind für die Abdichtung nicht erforderlich. Ferner ist es durch diese Ausgestaltung der Abdichtung nicht möglich, dass ein Fluid mit den gegebenenfalls exponierten Stoßkanten des Verbundrohrs 34 in Kontakt kommt und diese beeinträchtigt.

Damit wird nicht nur die Dichtheit der unlösbaren Verbindung auf einfache und ökonomische Weise sichergestellt, sondern auch die an der Übergangsstelle vom Rohr 34 zum Fitting 2 auftretende Querschnittsverengung verringert, so dass eine daraus potentiell erwachsende Quelle von Turbulenzen und/oder Druckabfällen zumindest abgeschwächt wird. Es ist grundsätzlich auch denkbar, den Stützkörper 8 mit vollem Umfang in die Innenumfangsfläche des Rohrs 34 einzuformen, wodurch eine Querschnittsverengung vollständig vermieden würde.

Vorteilhafterweise bestehen das Fitting 2 und die innere Schicht des Verbundrohrs 34 aus dem gleichen Werkstoff, beispielsweise einem Kunststoff. Dadurch ist eine optimale Verträglichkeit zwischen den Komponenten der unlösbaren Verbindung gewährleistet.

Weiterhin wird der an der Außenumfangsfläche der Hülse 22 angeordnete Rastvorsprung 26 während des Einführvorgangs durch den Außenkörper 6 als Widerlager gegen die Außenumfangsfläche des Rohrs 34 gedrückt. Dementsprechend wird der Fixiervorsprung 28 in der Außenumfangsfläche des Rohrs 34 fest verankert, so dass eine dauerhafte Verbindung zwischen Rohr 34 und Hülse 22 geschaffen wird. Zum Abschluss des axialen Pressvorgangs rastet der an der Außenumfangsfläche der Hülse 22 angeordnete Rastvorsprung 26 in der an der Innenumfangsfläche des Außenkörpers 6 angeordnete Rastnut 16 ein, so dass ein axiales Entfernen des von der Hülse 22 umgriffenen Rohrendes aus der zwischen dem Außenkörper 6 und dem Stützkörper 8 gebildeten Nut 14 nicht möglich ist.

Die unlösbare Verbindung ist damit hergestellt. Eine axiale Bewegung des Rohrs 34 aus dem Fitting 2 heraus wird durch den Eingriff des Rastvorsprungs 26 in die Rastnut 16 verhindert. Eine axiale Bewegung des Rohrs 34 weiter in die Nut 14 hinein wird in diesem Beispiel durch die Abmessungen der Nut 14 verhindert. Es ist aber auch möglich, die axiale Position des in die Nut 14 eingreifenden Rohrs 34 mit Hilfe des an dem geschlitzten Ende der Hülse 22 angeordneten flanschartigen Vorsprungs 30 zu bestimmen, welcher an zumindest einem Abschnitt der Stoßfläche des Außenkörpers 6 zu liegen kommt.

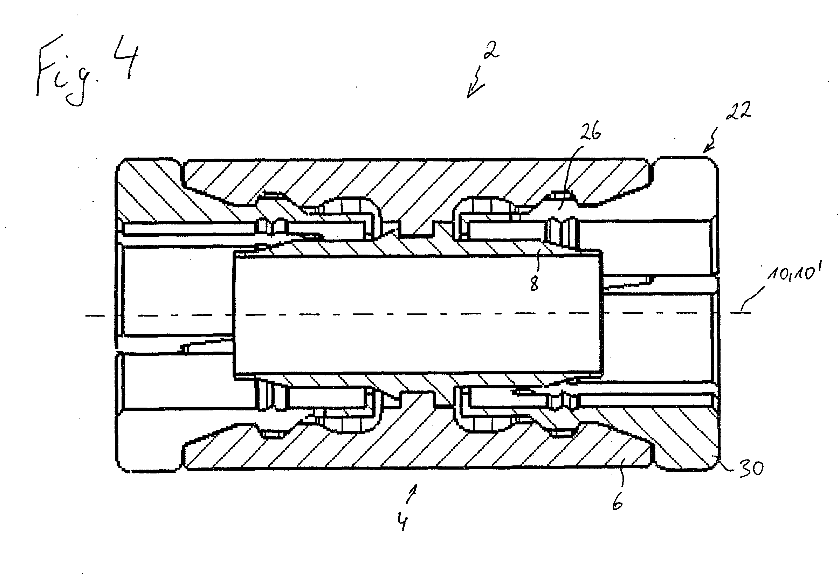

Fig. 4 zeigt in einem Ausführungsbeispiel ein zweiteiliges Fitting 2, in welches eine Hülse 22 eingeführt ist, in einer Querschnittsansicht. Das Rohr ist in Fig. 4 aus Gründen der Übersichtlichkeit nicht abgebildet. Die Hülse 22 aus Fig. 4 unterscheidet sich von der in den Fig. 2a bzw. 3a und 3b dargestellten Hülse 22 insofern, als zwischen dem flanschartigen Vorsprung 30 an der Außenumfangsfläche des geschlitzten Endes der Hülse 22 und dem Rastvorsprung 26 die Dicke der Hülse 22 abnimmt. Die resultierende, zu der Achse 10, 10' der Hülse 22 geneigte Außenumfangsfläche ist an die Innenumfangsfläche des Außenkörpers 6 des Fittings 2 im Bereich dessen distalen Endes angepasst, so dass eine flächige Anlage zwischen beiden Abschnitten nach dem Verpressungsvorgang möglich ist. Auf diese Weise können die axialen Positionen der Hülse 22 und des Fittings 2 zueinander sichergestellt werden.

Der Stützkörper 8 des Fittings 2 ist in diesem Beispiel aus einem anderen Material als der Außenkörper 6 und Teile des Grundkörpers 4 hergestellt. Beispielsweise kann der Stützkörper 8 aus einem metallischen Werkstoff wie Kupfer, Rotguss oder einem Edelstahl gefertigt sein, wohingegen Teile des Grundkörpers 4 sowie der Außenkörper 6 aus einem Kunststoff bestehen. Diese Ausgestaltung ist insbesondere dann vorteilhaft, wenn das Fitting 2 zum Herstellen einer unlösbaren Verbindung mit einem Verbundrohr 34 vorgesehen ist, welches eine innere Schicht aus einem dem Material des Stützkörpers 8 entsprechenden Werkstoff aufweist. In diesem Fall wäre die innere Schicht des Verbundrohrs 34 vorzugsweise also ebenfalls aus Kupfer, Rotguss oder einem Edelstahl.

## Patentansprüche

1. Unlösbare Verbindung
- mit einem Fitting (2) für Fluidleitungen, welches einen Grundkörper (4), einen Außenkörper (6) und einen Stützkörper (8) aufweist, wobei der Außenkörper (6) und der Stützkörper (8) zwischen sich eine Nut (14) ausbilden, wobei der Außenkörper (6) an der Innenumfangsfläche mindestens eine Rastnut (16) aufweist und wobei der Stützkörper (8) an der Außenumfangsfläche eine gegen die Achse (10) des Fittings (2) geneigte Dichtfläche (20) aufweist,
- mit einer Hülse (22) für Fluidleitungsrohre, welche mindestens einen an der Außenumfangsfläche angeordneten Rastvorsprung (26) und mindestens einen in axialer Richtung (10') verlaufenden, offenen Schlitz (24) aufweist, wobei im Bereich des Rastvorsprungs (26) an der Innenumfangsfläche mindestens ein Fixiervorsprung (28) angeordnet ist, und
- mit einem Rohr (34),
- wobei die Hülse (22) ein Rohrende unter Vorspannung umgreift,
- wobei das Rohrende mit der Hülse (22) unter Vorspannung in die Nut (14) eingreift,
- wobei die Rastnut (16) und der Rastvorsprung (26) einen Kraftschluss bewirken,
- wobei der Stützkörper (8) zumindest teilweise in die Innenumfangsfläche des Rohrs (34) eingeformt ist und
- wobei die Fixiervorsprünge (28) in die Außenumfangsfläche des Rohrs (34) eingeformt sind.

2. Unlösbare Verbindung nach Anspruch 1,
**dadurch gekennzeichnet,**
**dass** das dem geschlitzten Ende abgewandte Ende der Hülse (22) mindestens eine Öffnung (32) aufweist.

3. Unlösbare Verbindung nach Anspruch 1 oder 2,
**dadurch gekennzeichnet,**
**dass** das geschlitzte Ende der Hülse (22) an der Außenumfangsfläche einen flanschartigen Vorsprung (30) aufweist.

4. Unlösbare Verbindung nach einem der Ansprüche 1 bis 3,
**dadurch gekennzeichnet,**
**dass** das dem geschlitzten Ende abgewandte Ende der Hülse (22) radial einwärts, insbesondere um 90° abgewinkelt ist.

5. Unlösbare Verbindung nach einem der Ansprüche 1 bis 4,
**dadurch gekennzeichnet,**
**dass** sich die Dicke des Außenkörpers (6) zwischen dessen distalem Ende und der Rastnut (16) radial einwärts vergrößert.

6. Unlösbare Verbindung nach einem der Ansprüche 1 bis 5,
**dadurch gekennzeichnet,**
**dass** der Außenkörper (6) den Stützkörper (8) in axialer Richtung (10, 10') überragt.

7. Unlösbare Verbindung nach einem der Ansprüche 1 bis 6,
**dadurch gekennzeichnet,**
**dass** der Grundkörper (4) und der Stützkörper (8) zweiteilig ausgebildet sind.

## Claims

1. Non-detachable connection
- having a fitting (2) for fluid conduits, which has a base body (4), an outer body (6) and a support body (8), wherein the outer body (6) and the support body (8) form a groove (14) between them, wherein the outer body (6) has at least one latching groove (16) on the inner circumferential surface, and wherein the support body (8) on the outer circumferential surface has a sealing surface (20) inclined towards the axis (10) of the fitting (2),
- having a sleeve (22) for fluid conduit pipes, which has at least one latching projection (26) arranged on the outer circumferential surface and at least one open slit (24) running in the axial direction (10'), wherein at least one fixing projection (28) is arranged in the area of the latching projection (26) on the inner circumferential surface, and
- having a pipe (34),
- wherein the sleeve (22) envelops a pipe end under pre-stress,
- wherein the pipe end with the sleeve (22) under pre-stress engages with the groove (14),
- wherein the latching groove (16) and the latching projection (26) produce a frictional connection,
- wherein the support body (8) is at least partly formed into the inner circumferential surface of the pipe (34), and
- wherein the fixing projections (28) are formed into the outer circumferential surface of the pipe (34).

2. Non-detachable connection according to Claim 1, **characterised in that** the end of the sleeve (22) facing away from the slit end has at least one opening (32).

3. Non-detachable connection according to Claim 1 or 2, **characterised in that** the slit end of the sleeve (22) has a flange-like projection (30) on the outer circumferential surface.

4. Non-detachable connection according to any one of Claims 1 to 3, **characterised in that** the end of the sleeve (22) facing away from the slit end is angled radially inwards, in particular by 90°.

5. Non-detachable connection according to any one of Claims 1 to 4, **characterised in that** the thickness of the outer body (6) increases radially inwards between its distal end and the latching groove (16).

6. Non-detachable connection according to any one of Claims 1 to 5, **characterised in that** the outer body (6) extends beyond the support body (8) in the axial direction (10, 10').

7. Non-detachable connection according to any one of Claims 1 to 6, **characterised in that** the base body (4) and the support body (8) are formed in two parts.

## Revendications

1. Liaison indissoluble
- avec un raccord (2) pour conduites de fluide, qui est doté d'un corps de base (4), d'un corps extérieur (6) et d'un corps de support (8), le corps extérieur (6) et le corps de support (8) formant entre eux une rainure (14), sachant que le corps extérieur (6) est doté, sur la face périphérique extérieure, d'une face d'étanchéité (20), qui est inclinée contre l'axe (10) du raccord (2),
- avec une douille (22) pour conduites de fluide, qui est dotée d'au moins une saillie d'enclenchement (26), disposée sur la face périphérique extérieure, et d'au moins une fente (24) ouverte, qui s'étend dans la direction axiale (10'), sachant que, dans la région de la saillie d'enclenchement (26), sur la face périphérique intérieure, est disposée au moins une saillie de fixation (28), et
- avec un tube (34),
- sachant que la douille (22) enveloppe sous précontrainte une extrémité du tube,
- la rainure d'enclenchement (16) et la saillie d'enclenchement (26) réalisant une connexion par friction,
- sachant que le corps de support (8) est formé, au moins partiellement, dans la face périphérique intérieure du tube (34), et
- les saillies de fixation (28) étant formées dans la face périphérique extérieure du tube (34).

2. Liaison indissoluble selon la revendication 1, **caractérisée en ce que** l'extrémité de la douille (22), opposée à l'extrémité fendue, est dotée d'au moins une ouverture (32).

3. Liaison indissoluble selon revendication 1 ou 2, **caractérisée en ce que** l'extrémité fendue de la douille (22) est dotée d'une saillie (30) en forme de flasque.

4. Liaison indissoluble selon l'une des revendications 1 à 3, **caractérisée en ce que** l'extrémité de la douille (22), opposée à l'extrémité fendue, est coudée, vers l'intérieur, dans la direction radiale, en particulier de 90 °.

5. Liaison indissoluble selon l'une des revendications 1 à 4, **caractérisée en ce que** l'épaisseur du corps extérieur (6) augmente vers l'intérieur, dans la direction radiale, entre l'extrémité distale de celui-ci et la rainure d'enclenchement (16).

6. Liaison indissoluble selon l'une des revendications 1 à 5, **caractérisée en ce que** le corps extérieur (6) fait saillie au-delà du corps de support (8) dans la direction axiale (10, 10').

7. Liaison indissoluble selon l'une des revendications 1 à 6, **caractérisée en ce que** le corps de base (4) et le corps de support (8) sont formés de deux pièces.
